(19) Europäisches Patentamt
European Patent Office
Office européen des brevets

(11) Publication number: **0 271 360 A2**

(12) # EUROPEAN PATENT APPLICATION

(21) Application number: **87310932.6**

(22) Date of filing: **11.12.87**

(51) Int. Cl.⁴: **F 02 C 7/08**
F 02 C 6/18, F 23 R 3/40

(30) Priority: **12.12.86 US 940892**

(43) Date of publication of application:
**15.06.88 Bulletin 88/24**

(84) Designated Contracting States: **DE FR GB IT SE**

(71) Applicant: **Allied-Signal Inc.**
**9851-9951 Sepulveda Boulevard P.O. Box 92248**
**Los Angeles California 90009 (US)**

(72) Inventor: **Mackay, Robin**
**6626 Locklenna Lane**
**Rancho Palos Verdes California 90274 (US)**

(74) Representative: **Rees, David Christopher et al**
**Kilburn & Strode 30 John Street**
**London WC1N 2DD (GB)**

(54) **Power generating device and method.**

(57) A power generation system comprises a turbine (26), a compressor (16), and a generator (28) on a common shaft (25). A countercurrent heat exchanger (20) is employed to raise incoming compressed fuel to a temperature sufficient to cause combustion to occur in a catalytic combustor (24). The combusted products are used to power the turbine (26), and the resulting mechanical energy extracted by the turbine (26) can power electrical generator (28).

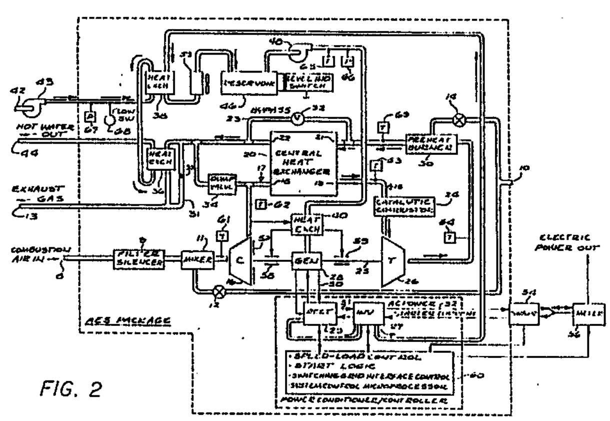


FIG. 2

EP 0 271 360 A2

## Description

### POWER GENERATING DEVICE AND METHOD

This invention relates generally to power generation systems. The invention is particuarly applicable to such systems in which a fuel is used to produce power, both mechanical and electrical, and also heat.

The need has existed for a small power generation device having an ecomony of scale suitable for small businesses for some time. Many of the problems and design considerations involved in the small power generation systems are described in a paper entitled "Development of a Small-Scale Catalytic Gas Turbine Combustor", Journal of Engineering for Power, volume 104, pp 52-57 January 1982. The article cites problems associated with power generation.

The article discloses that achieving catalyst lightoff is a problem during cold startup of any catalytic device. The lightoff systems evaluated in the article, which are cumbersome and duplicative, include an opposed jet igniter, a packaged burner, an electrical resistance air preheater, an aft-end torch, and hydrogen injection. A discussion of the benefits of each method is included in the article.

It is therefore an object of the invention to provide a power generation system which is compact, versatile and exhibits a relatively easy start-up procedure.

According to the invention, there is provided a device for combusting fuel and deriving work therefrom comprising: an air inlet; a fuel inlet; means for mixing the air and fuel; compression means connected to the mixing means for compressing the air and fuel mixture; and combustion means for combusting the air and fuel mixture characterised by a heat exchanger connected to the compression means adding heat to the compressed air and fuel mixture, the combustion means being connected to the heat exchanger for combusting the heated compressed fuel and air mixture; a turbine connected to the combustion means to receive the exhaust gas from the combustion means and arranged to convert energy released from the combustion into mechanical energy, the turbine also being connected to the heat exchanger to provide heat to the compressed air and fuel mixture; and heating means between the turbine and the heat exchanger to provide heat during startup.

Preferably, the combustion means is a catalytic combustor, and conveniently, the compression means is a compressor powered by the turbine e.g. by means of a common shaft. Preferably, the device includes a filter arranged to filter the air prior to its entry to the compression means. Preferably also, the device includes transduction means for converting the mechanical energy produced by the turbine into electrical energy.

Preferably, the device includes a shaft linking the compression means, the turbine and the transduction means, to allow mechanical energy extracted by the turbine to be used by the transduction means and to drive the compression means.

Preferably, the transduction means comprises: a generator, powered by mechanical energy from the turbine, which produces alternating electric current; a rectifier into which the alternating electric current produced by the generator flows, the rectifier rectifying the alternating current to direct current; and an inverter which accepts the direct current and converts the direct current to alternating current of a preselected frequecy. The generator may be a permanent magnet brushless generator.

Thus, the electrical energy may be an alternating current, the frequency of which is independent of the speed of the turbine. The device preferably includes means to start the compression means and the turbine and heat exchanger during startup.

Conveniently, therefore, the transduction means is also capable of motoring over the compression means and the turbine during startup.

Preferably, the device includes a support for the fuel inlet, the air inlet the mixing means the compression means, the heat exchanger, the combustion means the turbine, the generator, the rectifier, and the inverter, to enable the device as a whole to exist as a packaged unit.

Preferably, the device includes an exhaust heat heat exchanger connected to the hot side outlet of the main heat exchanger arranged to extract further heat energy from the exhaust gases after the exhaust gases have passed through the main heat exchanger.

Preferably, the device also includes a coolant heat sink exchanger having a heat receiving circuit and a heat transmitting circuit, the heat receiving circuit inlet being connected to a water inlet, the heat receiving circuit outlet being connected to the heat receiving circuit of the exhaust heat heat exchanger to enable the exhaust heat heat exchanger provide hot water for any use.

Preferably, the device also incldues an equipment heat exchanger arranged to draw frictional heat away from the turbine, the compression means and transduction means and to transmit heat by means of a suitable liquid coolant to the heat transmitting circuit of the coolant heat sink exchanger.

Preferably, the device includes a controller arranged to sense conditions within the system in operation and to control the supply of fuel in response to the conditions.

The power generation system of the present invention may therefore be considered to comprise a turbine, a compressor, and a generator on a common shaft; a countercurrent heat exchanger is employed to raise incoming compressed fuel to a temperature sufficient to cause combustion to occur in the presence of a catalyst; the combusted products are used to power the turbine, and the resulting mechanical energy extracted by the turbine can power the electrical generator.

For startup, the power generation system of the present invention may employ a rudimentary burner between the turbine discharge and the inlet to the hot side of the heat exchanger. While the turbine is motored over, using any external source of power or stored energy, the burner will operate on low pressure natural gas to heat the hot side of the heat exchanger thus causing the temperature of the cold side of the heat exchanger to begin experiencing temperature elevation to a point that the catalyst would start to react a fuel-air mixture if it were present. Once the fuel and air are introduced and begin to react, enough heat will be generated that the reaction can be sustained without head from the burner. The turbine can be motored over by using the generator, which can also be used as a motor, by connecting it to external power. A compressed air device can also be used to motor the system. Power generated from the system's last use can be used to compress and store compressed air to await the next startup.

Locating the preheat combustor downstream of the turbine wheel eliminates the need for an alternative fuel or a fuel gas compressor to provide gas at a sufficiently high pressure to flow into the preheat combustor to start up the system. The electricity production system is especially flexible. Variable frequency alternating current is produced by direct mechanical generation. The variable frequency alternating current is rectified to direct current. The direct current is used to feed an inverter which will produce alternating current at any preselected or variable frequency.

Also eliminated is the need for water injection or selective catalytic reduction as may be required in conventional power generation system, in order to try to control the NOX (nitrogen oxides) content, since with this arrangement, it is expected to be in the one or two parts per million volume range. This emission level is less than one-quarter of the most stringent emission requirement currently known.

According to another aspect of the invention, there is provided a method for deriving work from the combustion of fuel comprising the steps of : forming a fuel-air mixture; compressing the fuel-air mixture and catalytically combustion the mixture; characterised by heating the compressed fuel-air mixture prior to combustion; expanding the combustion products through a turbine to produce mechanical energy; using the heat from the expanded combustion products in the air-fuel mixture heating step; and separately heating the compressed fuel-air mixture during startup. The method preferably includes the further step of: generating electricity using the mechanical energy produced, and/or using the mechanical energy produced to operate a refrigeration unit.

According to another aspect of the invention there is provided a power generating system comprising: a catalytic combustor receiving a compressed, elevated temperature fuel-air mixture to react with the catalyst in the combustor to produce high energy reaction products; a gas turbine receiving the high energy, reaction products from the catalytic combustor to expand the products therethrough and derive useful rotational work therefrom; a compressor having a common shaft with the gas turbine and driven thereby to receive air and raise its pressure; a heat exchanger receiving the compressed air from the compressor and the high energy reaction products from the catalytic combustor to remove heat from the reaction products and add heat to the air; and a preheat burner operably disposed between the turbine exhaust and the heat exchanger to receive and combust fuel during startup of the power generating system to preheat the air from the compressor to a temperature sufficient, when the compressed air is mixed with fuel, to initiate the catalytic reaction within the catalytic combustor until the reaction products from the catalytic combustor are sufficient in temperature to raise the air to a temperature sufficient to maintain the catalytic reaction.

The preheat burner in such a case may be operably disposed between the turbine exhaust and the heat exchanger to receive and combust fuel during startup of the sytem to preheat the fuel-air mixture from the compressor to a temperature sufficient to initiate the catalytic reaction within the catalytic combustor unit the reaction products from the catalytic combustor are sufficient in temperature to raise the fuel-air mixture to a temperature sufficient to maintain the catalytic reaction; and preferably an electrical generating means is operably associated with the gas turbine and driven thereby to produce electrical energy.

According to another aspect of the invention, there may be provided a co-generation device comprising: a filter capable of filtering inlet air; a mixer for mixing air and a fuel, and connected to the filter; a compressor for compressing the air and fuel, the compressor being connected to the mixer; a main heat exchanger having a cold side and a hot side, each having an inlet and an outlet, the cold side inlet being connected to the compressor; a catalytic combustor connected to the cold side outlet of the main heat exchanger; a turbine, having an inlet and an outlet, the inlet being connected to the catalytic combustor; a preheat burner connected to the outlet of the turbine to supply initial heat in order to start the co-generation device, the preheat burner being connected to the hot side inlet of the main heat exchanger; a recovery heat exchanger connected to the hot side outlet of the main heat exchanger to recover heat for use for any purpose; and a generator set mechanically connected to the turbine, for producing electric energy from mechanical work supplied by the turbine.

The invention may also be considered to extend to a device for catalytically combusting fuel and deriving work therefrom comprising: means for admitting fuel to the device; means for admitting combustion air to the device; means for mixing the combustion air with the fuel to form a combustible mixture; means for compressing the combustible mixture; a main heat exchanger having a cold side inlet a cold side outlet, a hot side inlet and a hot side outlet, the cold side inlet being in mass flow communication with the cold side outlet, and the hot side inlet being in mass flow communication with the hot side outlet, the cold side inlet being capable of inletting the compressed combustible mixture to add heat thereto and to raise the temperature thereof; combustion means, downstream of and connected to the cold side outlet, for combusting the combustible mixture; a turbine means, connected to the combustion means for extracting mechanical work from the combustion means, the turbine means being connected to the hot side inlet of the main heat exchanger, the combusted mixture providing heat to the combustible mixture as it flows through the main heat exchanger, the combusted mixture then passing through the hot side outlet of the main heat exchanger; and burner means connected between the turbine means and the hot side inlet of the main heat exchanger to provide heat during startup.

More specifically, the invention may provide a power generating sytem used to convert fuel into electrical energy and heat energy comprising: a fuel inlet; an air inlet having a filter, to admit air and filter out any contaminants contained in the air; a first fuel control valve connected to the fuel inlet to regulate the amount of fuel admitted to the fuel inlet; a mixer having two inputs and an output, one input being connected to the first fuel control valve , the other input being connected to the air inlet; a compressor, having an inlet and an outlet, the compressor inlet being connected to the mixer output for accepting and compressing the air-fuel mixture; a central heat exchanger having a heat receiving circuit and a heat transmitting circuit, the heat receiving circuit being connected to the outlet of the compressor to admit and add heat to the air-fuel mixture; a catalytic combustion chamber having an inlet and an outlet and containing a catalyst suitable for combusting the fuel-air mixture at a pre-specified design temperature to form combustion product, the catalytic combustion chamber inlet being connected to the heat receiving circuit of the central heat exchanger to accept the fuel-air mixture after heat has been added in the heat exchanger; a turbine, having an input and an output, the turbine input being connected to the catalytic combustion chamber outlet to accept and become powered by the flow of combustion products formed in the catalytic combustion chamber, the turbine further having a shaft capable of transmitting mechanical energy imparted to the turbine by the flow of the combustion products; a preheat burner, having an inlet and an outlet, the inlet being connected to the turbine output to provide heat during start-up to raise the heat of the system sufficiently for combustion to begin, and thereafter to be deactivated, the preheat burner being connected to the heat transmitting circuit of the cental heat exchanger to transmit some of the heat produced by combustion, to the fuel-air mixture to raise its temperature to a level sufficient to cause combustion when the fuel-air mixture in the present of the catalyst; an exhaust heat water heater having a heat transmitting circuit and a heat receiving circuit, the heat transmitting circuit of the exhaust heat water heater being connected to accept a flow of combustion products from the heat transmitting circuit of the central heat exchanger; an exhaust conduit connected to the heat transmitting circuit of the exhaust heat water heater to assist in transporting the combustion products to any location for exhaust; a water inlet; a water outlet; a coolant heat sink exchanger having a heat receiving circuit and a heat transmitting circuit, the heat receiving circuit being connected to the water inlet to receive cool water, the heat receiving circuit of the coolant heat sink exchanger being connected to the heat receiving circuit of the exhaust heat water heater to enable the exhaust heat water heater to receive water from the coolant heat sink exchanger, and the heat receiving circuit of the exhaust heat water heater being connected to the water outlet, which provides hot water for any use; a generator set having a rotatable shaft connected to the shaft of the turbine to enable the turbine to transmit mechanical work to the generator set to enable the generator set to produce useful electricl energy; an equipment heat exchanger having a heat transmitting surface and a heat receiving circuit, the heat transmitting surface acting to assist in drawing frictional heat away from the turbine compressor and generator set, the heat receiving circuit being arranged to accept, transmit heat into and pass along any suitable liquid coolant, the heat receiving circuit of the equipment heat exchanger being connected to the heat transmitting circuit of the coolant heat sink exchanger to allow the coolant to flow from the equipment heat exchanger to the coolant heat sink exchanger; and a pump having an input and an output, the input of the pump being operably connected to the heat transmitting circuit of the coolant heat sink exchanger, to accept the flow of cooled coolant and the pump and the cooled coolant the output of the pump being connected to the heat receiving circuit of the equipment heat exchanger in order to compete the path of flow for the coolant.

The system preferably includes a controller arranged to sense conditions withinn the system and to control the first and second fuel valves.

Preferably the system includes a thermal bypass valve connected in parallel with the heat transmitting circuit of the main heat exchanger; and a dump valve connected bewteen the outlet of the compressor and the heat transmitting circuit of the exhaust heat water heater.

Preferably, the controller comprises temperature sensors located on the compressor outlet, the catalytic combustion chamber inlet, the turbine outlet, the outlet of the preheat burner, and the pump outlet, the controller having controllability over the thermal bypass valve and the dump valve in additon to the first and second fuel control valves in order to maximise the operational efficiency of the system.

The invention may be carried into practice in various ways and one embodiment will now be described by way of example with reference to the accompnaying drawings in which:-

Figure 1 is a simplified schematic view of a power generation system in accordance with the present invention;

Figure 2 is a more detailed description of the power generation sytem of Figure 1; and

Figure 3 is an isometric view of the skidded packaged power generation system unit of Figures 1 and 2.

Referring to Figure 1, a simplified schematic view of the power generation system of the present invention is illustrated. The fuel air mixture enters the compressor 16 where its pressure is boosted and sent to the cold side of the heat exchanger 20. In the heat exchanger 20, the compressed fuel air mixture absorbs heat sufficient to raise its temperature to a level necessary to sustain combustion in the presence of a catalyst. The combustion chamber 24 contains any suitable catalyst capable of combusting the compressed, high temperature, fuel air mixture at the process conditions. Some known catalysts useable in the catalytic combustion chamber include platinum and palladium, as well as metal oxide catalysts with active nickel and cobalt elements.

After combustion, the heated gases of the combustion product are directed to a turbine 26. The energies and pressures created during combustion enable the combustion products to drive the turbine 26. After power the turbine 26, the hot combustion gases return to the hot side of the heat exchanger 20 where their enhanced temperature is used to heat the cooler incoming compressed fuel air mixture. In Figure 1, the exhaust gas is shown simply leaving the heat exchanger 20, but since the exhaust gas still contains useable heat energy, it is a useable heat source, as will be later shown in greater detail.

Between the turbine 26 and the compressor 16, there is a generator 28.

In the preferred embodiment of the present invention, the turbine 26, generator 28, and compressor 16 are one integrated unit and the work inputs and outputs are accomplished via a single shaft 25. It is to be understood that the present invention can be used without a generator, so that work produced and transmitted by the shaft 25 can be applied directly, as for example in the case of a mechanically driven refrigeration system. The generator 28 of the illustrated embodiment produces alternating current.

In the preferred embodiment of the present invention, the compressor-generator-turbine speed can be varied as dictated by energy demands impressed on the system externally. Variations in the speed of the compressor-generator-turbine will of necessity produce a variation in the frequency of the alternating current produced by the generator. Regardless of the frequency of the power produced, it can be receified to DC in a rectifier 29, and then converted back to any specified frequency by an inverter 27. Accordingly, when less power is required, the control system can reduce the speed of the turbine 26 without affecting the quality of the alternating current output. Reducing the speed of the system reduces the airflow, which leaves the turbine inlet temperature essentially constant, thus maintaining a high efficiency at part load. A heat exchanger bypass line 23, including a valve 32 is provided to achieve thermal control.

Figure 2 shows the power generation system in more detail. The present invention is useable with both gaseous and liquid fuels. In gaseous fuel mode, a fuel inlet 10 is supplied with any suitable gaseous fuel, preferably methane or natural gas. If field available natural gas is used, the methane content and BTU or calorific value may require stoichiometric adjustments. Natural gas may contain amounts of ethane, propane and heavier hydrocarbons, tending to raise the BTU value. Conversely, natural gas may contain inerts, such as nitrogen and carbon dioxide which tend to lower the BTU value. During steady state operation the fuel enters at the fule inlet 10 and passes through a first fuel inlet control valve 12. The fuel then travels to a mixer 11. Combustion air enters at an air inlet 8 through a filter-silencer 9. The filter silencer 9 acts to filter out particulate contaminants and thereby protect the system internals. From the filter silencer 9, the combustion air travels to the mixer 11 where it is mixed with the fuel from the first fuel inlet control valve 12. The first fuel inlet control valve 12 is controlled to admit any amount of fuel necessary to operate the system in response to power or heating requirements placed on the system. The mixer 11 assists in forming a fuel-air mixture which then enters the compressor 16.

The compressor 16 compresses, and thereby raises the pressure of, the fuel air mixture. The compressed fuel-air mixture then enters the central heat exchanger 20 through a heat receiving circuit inlet 18. The heat absorbed by the compressed fuel air mixture while in the central heat exchanger 20 will raise its temperature to a level sufficient to enable it to react combustibly in the presence of a catalyst. The compressed fuel air mixture then exits via a heat receiving circuit outlet 19. The hot compressed fuel air mixture enters the catalytic combustion chamber 24 where in the presence of a suitable catalyst it combustibly reacts exothermically to form combustion products at an even higher temperature. The hot combustion products are then forced into the turbine 26. The turbine 26 is powered by these combustion products, producing useful work. The useful work is transmitted through the shaft 25 to the generator 28 and the compressor 16.

In liquid fuel mode, the fuel may be injected between the heat receiving circuit outlet 19 of the central heat exchanger 20 and the catalytic combustion chamber 24 as shown by a fuel injection port 15. The injected fuel would then mix with the compressed air before reaching the catalytic combustion chamber 24. High pressure gaseous fuel may also be injected at this point if desired, or at a port 17 to allow the fuel to be preheated. Injection downstream of the compressor 16 will prevent possible contamination and dirt buildup in the compressor 16.

The use of a single shaft between the turbine, generator, and compressor adds to the compactness and reliability of the power generation system. The shaft 25 is supported by a self pressurised air bearing 58 and air bearing 59, and held axially by an air thrust bearing 57. The air bearings eliminate the need for a separate bearing lubrication system and reduce the occurrence of maintenance and servicing.

Once the hot combustion products have powered the turbine 26, they travel through the preheat burner 30. The preheat burner 30, used during startup, is not used during steady state operation.

The preheat burner 30 is supplied with fuel through a second fuel inlet control valve 14, which is in turn fed from the fuel inlet 10. After leaving the preheat burner 30 heating area, the hot combustion products enter the heat transmitting circuit of the heat exchanger 20 via a heat transmitting circuit inlet 21. While travelling through the heat transmitting circuit of the central heat exchanger 20, the hot combustion products provide heat to the fuel air mixture located in the heat receiving circuits of the heat exchanger 20. In this way, part of the heat of combustion is resupplied to the incoming fuel to assist it in achieving its high temperature.

After surrendering part of its heat, the hot combustion products leave the central heat exchanger 20 via a heat transmitting circuit outlet 22. The bypass line 23 is provided in parallel with the heat transmitting circuit of the central heat exchanger 20 to allow hot combustion products to circumvent the heat exchange process controllably, in order to control the process rates and temperatures more effectively. For example, on cold days when insufficient heat is available from the exhaust, the bypass may be opened and modulated to provide the necessary amount of heat required. The bypass line 23 is fitted with a thermal bypass valve 32, to control the flow in the bypass line 23. Also, a dump valve 34 is provided between the heat receiving circuit inlet 18 of the central heat exchanger 20, and the heat transmitting circuit outlet 22.

In the preferred embodiment, during steady state operation, after the hot combustion products give up a part of their heat in the heat transmitting circuit of the central heat exchanger 20 they proceed to an exhaust heat water heater 36. While in the exhaust heat water heater 36, the combustion products release another measure of heat before being piped off the situs of the system through the combustion product exhaust 13. An exhaust bypass line 31 is provided to allow flexiblity in the amount of heat provided in the exhaust heat water heater 36. An exhaust bypass valve 33 in the exhaust bypass line allows the control to allow exhaust gases to bypass or go through the exhaust heat water heater 36. It is understood that after passing through the combustion products exhaust 13, the combustion products may be further processed as desired. Further processing may include further heat exchange, combustion product separation and clarification, or further treatment before release to the atmosphere.

The power generation system of the present invention is also generally fitted with a hot water system which operates in conjunction with the power generation system's coolant system. A cool water inlet 42 is connected to an offskid water supply which provides a supply of water from a point external to the skid boundary. An optional offskid pump 43 may be used, but so long as an offskid water supply and water return are provided such that the pressure of the water supply is greater than the water return, it will suffice. A hot water outlet 44 is connected to a hot water return, also offskid. If the pressure of the cool water inlet 42 is sufficiently greater than that of hot water outlet 44, then the offskid pump 43 will not be necessary.

Water flows from the cool water inlet 42, through the offskid pump 43, to a coolant heat sink exchanger 38. After heat is added to the water in the coolant heat sink exchanger 38, the water proceeds to an exhaust heat water exchanger 36, where it then picks up heat from the combustion products. The water now having achieved its highest temperature in the system, leaves through a hot water outlet 44.

The compressor-generator-turbine assembly generates excess heat. Heat is generated in the generator 28 due to inevitable inefficiencies in generator design. In order to extend the life of the generator 28 assembly, as well as to capture useful heat, a coolant system is provided. An equipment heat exchanger 40 acts to draw heat generated by the operation of the generator 28. Any acceptable coolant can be used in the coolant system of the power generation system of the present invention. The coolant passes through the equipment heat exchanger 40, absorbing excess heat from the generator 28, rectifier 29, and inverter 52. After the coolant has absorbed heat from these sources, it travels to the coolant heat sink exchanger 38 and gives up its heat to the incoming water, as previously mentioned. A fan coil exchanger 39 can be employed to dissipate heat when it is not desired to heat water. The coolant then flows to a reservoir 46. The coolant is drawn from the reservoir 46 by a coolant pump 48. The coolant pump 48 pumps the coolant back to the equipment heat exchanger 40 to complete the coolant cycle.

In the electrical generation system, the generator 28 is expected to operate at about 80,000 RPM when the system is powered to 100%. The frequency of output is therefore quite high at 2,666 hertz, or for a two pole generator, at 1,333 hertz. Since differing power levels of turbine operation will produce differing generator speeds, the generator 28 can be expected to produce variable frequency alternating current 50 as a direct generation product. The variable frequency alternating current 50 is then fed into the rectifier 29. Rectified direct current 51 is produced by the rectifier 29 which is then fed into the inverter 27, and the inverter 27 then produces alternating current power 52, which can be either a constant or variable frequency. The variable frequency variable voltage power can be used for variable speed motor drives.

This arrangement allows for a wide flexibility in determining the electric utility service to be provided by the power generation system of the present invention. Because any inverter can be selected, frequency of inversion can also be selected at will. The inverter battery storage capacity can be selected, in combination with the inverter requirements, to produce uninterrupted power for hours after generator failure. If there is a direct use for high frequency power, the rectifier and inverter can be eliminated. When high frequency power is used for flourescent lights, not only does the lamp operate more efficiency, but the inductor balast is replaced by a capacitor balast. Direct high frequency voltage used in a lighting system can result in a 25% greater efficeinty. If it is decided to eliminate the inverter 52 yet keep the rectifier 29, the resulting direct current can be used for plating, elevator operation and incadescent lighting.

Switch/starter controls 54 are provided for startup and to operate the power generation system of the present invention and are shown in Figure 2 as being located offskid. A meter 56 provides electric power measurement. This is entirely optional and can be used to measure efficiency, or as a basis for charging for metered power sold to electric utilities or others.

It is foreseeable that the power generation system of the present invention may be operated intermittently. The power generation system is designed for easy start-up. In order to start up a "cold" power generation system, the preheat burner 30 is used to bring the system heat up to a point of operability. With the first fuel inlet control valve 12 closed, the second fuel inlet control valve 14 is opened, allowing fuel to enter the preheat burner 30 directly. As the system is motored over, air is pushed, at low temperature through the compressor 16 and turbine 26. The preheat burner 30 uses oxygen in this stream to burn the fuel within the burner. A spark or other device is used to ignite a flame whose combustion products travel through the central heat exchanger 20. As the temperature of the heat tansmitting circuit of central heat exchanger 20 rises, so will the temperature of the incoming air. Once the catalytic combustion chamber 24 and the incoming air reaches and exceeds the lightoff temperature for a fuel air mixture, were such a mixture present, the fuel gas inlet control valve is opened and the second fuel gas inlet control valve is closed. The fuel air mixture enters and passes through the central heat exchanger 20 where it is heated and continues to the catalytic combustion chamber 24 where it begins to ignite and increase the speed of the system. Then the hot combustion products from the turbine 26 begin to supply the central heat exchanger 20 with the heat necessary to heat the incoming compressed fuel air mixture sufficiently to sustain continuous, steady state combustion in the central heat exchanger 20. Thus, the system will produce enough of its own heat to be self-sustained.

The power generation system of the present invention is equipped with a controller 60. The controller 60 is connected to a low pressure fuel air temperature sensor 61, a high pressure fuel air temperature sensor 62, a high temperature fuel-air tempeature sensor 63, an after turbine combustion products temperature sensor 64, a coolant temperature sensor 65, a coolant system pressure sensor 66, a water pressure sensor 67, a water flow sensor switch 68 and a preheat burner process temperature sensor 69. Using these sensors, the controller 60 will supervise both startup and system optimisation during steady state operation. For example, when the preheat burner process temperature sensor 69 is sufficiently hotter then is necessary for the combustion process to become self-perpetuating, the controller 60 will cause the first fuel inlet control valve 12 to open, and the second fuel inlet control valve 14 to shutdown. The controller 60 will use all of the other sensors to help determine the external demands upon the power generation system, as well as the internal settings of the power generation system necessary to produce maximum efficiency. The controller 60 will control, for example, the thermal bypass valve 32 as well as the dump valve 34. It will have the ability to gauge the electrical power demands being made on the system, and to adjust the first fuel inlet control valve 12 to increase the power generation of the system. The controller 60 can also be made to measure the state of direct current storage in a battery if supplied in the inverter 27, and to adjust operations to maintain conditions of net charger, net drain or constant charger.

Referring to Figure 3, the cogeneration system can be built as a compact unit mounted on a skid 7. The width, length and height can be adjusted to fit a wide variety of dimensional requirements.

The power generation system can be built in several major modules such as the rotor group, the heat exchanger group, the catalytic combustion chamber, and the inverter and the control system. Each of these is relatively lightweight and compact. They can be replaced without breaking liquid lines, except for the coolant loop. Due to the use of air bearings in the compressor generator turbine assembly, the maintenance of the power geneation system of the present invention should be quite low. Scheduled maintenance will consist primarily of changing the filters in the filter silencer 9, and replacing catalyst elements.

Potential uses of this power generation sytem are many and diverse. It can be used as a source of electricity and heat for fast food restaurants. It can be used to drive air conditioning equipment. The present power generation system could be used to provide electricity and heat in remote locations of the oil patch or oilfields where hydrocarbon energy is readily available, while electrical power is not. In fact, this system could be used in almost every situation requiring more than just an electric generator (for example where heat is required, in addition to electrical or mechanical energy).

## Claims

1. A device for combusting fuel and deriving work therefrom comprising: an air inlet (8) a fuel inlet (10); means for mixing (11) the air and fuel; compression means (16) connected to the mixing means (11) for compressing the air and fuel mixture; and combustion means (24) for combusting the air and fuel mixture characterised by a heat exchanger (20) connected to the compression means (16) adding heat to the compressed air and fuel mixture, the combustion means (24) being connected to the heat exchanger (20) for combusting the heated compressed fuel and air mixture; a turbine (26) connected to the combustion means (24) to receive the exhaust gas from the combustion means and arranged to convert energy released from the combustion into mechanical energy, the turbine (26) also being connected to the heat exchanger (20) to provide heat to the compressed air and fuel mixture; and heating means (30) between the turbine (26) and the heat exchanger (20) to provide heat during startup.

2. A device as claimed in Claim 1 characterised in that the combustion means is a catalytic combustor (24).

3. A device as claimed in Claim 1 or Claim 2, characterised by a filter (9) arranged to filter the air prior to its entry to the compression means (16).

4. A device as claimed in any preceding claim characterised by transduction means (27,28,29) for converting the mechanical energy produced by the turbine (26) into electrical energy.

5. A device as claimed in Claim 4 characterised by a shaft (25), linking the compression means (16), the turbine (26) and the transduction means (28), to allow mechanical energy extracted by the turbine (26) to be used by the transduction means (28) and to drive the compression means (16).

6. A device as claimed in Claim 4 or Claim 5 characterised in that the transduction means comprises: a generator (28), powered by mechanical energy from the turbine (26), which produces alternating electric current; a rectifier (29) into which the alternating electric current produced by the generator (28) flows, the rectifier (29) rectifying the alternating current to direct current; and an inverter (27) which accepts the direct current and converts the direct current to alternating current of a preselected frequecy.

7. A device as claimed in any of Claims 4 to 6 characterised in that the transduction means (27,28,29) is also capable of motoring over the compression means (16) and the turbine (26) during startup.

8. A device as claimed in any of Claims 4 to 7 characterised by a support (7) for the fuel inlet (10), the air inlet (8), the mixing means (11), the compression means (16) the heat exchanger (20), the combustion means (24), the turbine (26), generator (28), the rectifier (29), and the inverter (27) to enable the device as a whole to exist as a packaged unit.

9. A device as claimed in any preceding claim characterised by an exhaust heat heat exchanger (36) connected to the hot side outlet of the main heat exchanger (20), arranged to extract further heat energy from the exhaust gases, after the exhaust gases have passed through the main heat exchanger (20).

10. A device as claimed in Claim 9 characterised by a coolant heat sink exchanger (38) having a heat receiving circuit and a heat transmitting circuit, the heat receiving circuit inlet being connected to a water inlet (42), the heat receiving circuit outlet being connected to the heat receiving circuit of the exhuast heat heat exchanger (36) to enable the exhaust heat heat exchanger (36) to provide hot water for any use.

11. A device as claimed in Claim 10 characterised by an equipment heat exchanger (40) arranged to draw frictional heat away from the turbine (26), the compression means (16) and the transduction means (27,28,29) and to transmit heat by means of a suitable liquid coolant to the heat transmitting circuit of the coolant heat sink exchanger (38).

12. A device as claimed in any preceding claim characterised by a controller (60) arranged to sense conditions within the system in operation and to cotrol the supply of fuel in response to the conditions.

13. A method for deriving work from the combustion of fuel comprising the steps of: forming a fuel-air mixture; compressing the fuel-air mixture and catalytically combusting the mixture; characterised by heating the compressed fuel-air mixture prior to combustion; expanding the combustion products through a turbine to produce mechanical energy; using the heat from the expanded combustion products in the air-fuel mixture heating step; and separately heating the compressed fuel-air mixture during startup.

14. A method as claimed in Claim 13 characterised by the further step of: generating electricity using the mechanical energy produced, and/or using the mechanical energy produced to operate a refrigeration unit.

15. A method as claimed in Claim 14 characterised in that the electricity generating step comprises: powering an alternating current generator (28) to produce alternating current electric energy the frequency of which varies with the rotational speed of the generator; rectifying the variable frequency alternating current electrical energy to produce direct current electrical energy; and inverting the direct current electrical energy to produce the required frequency alternating current electrical energy.

0271360

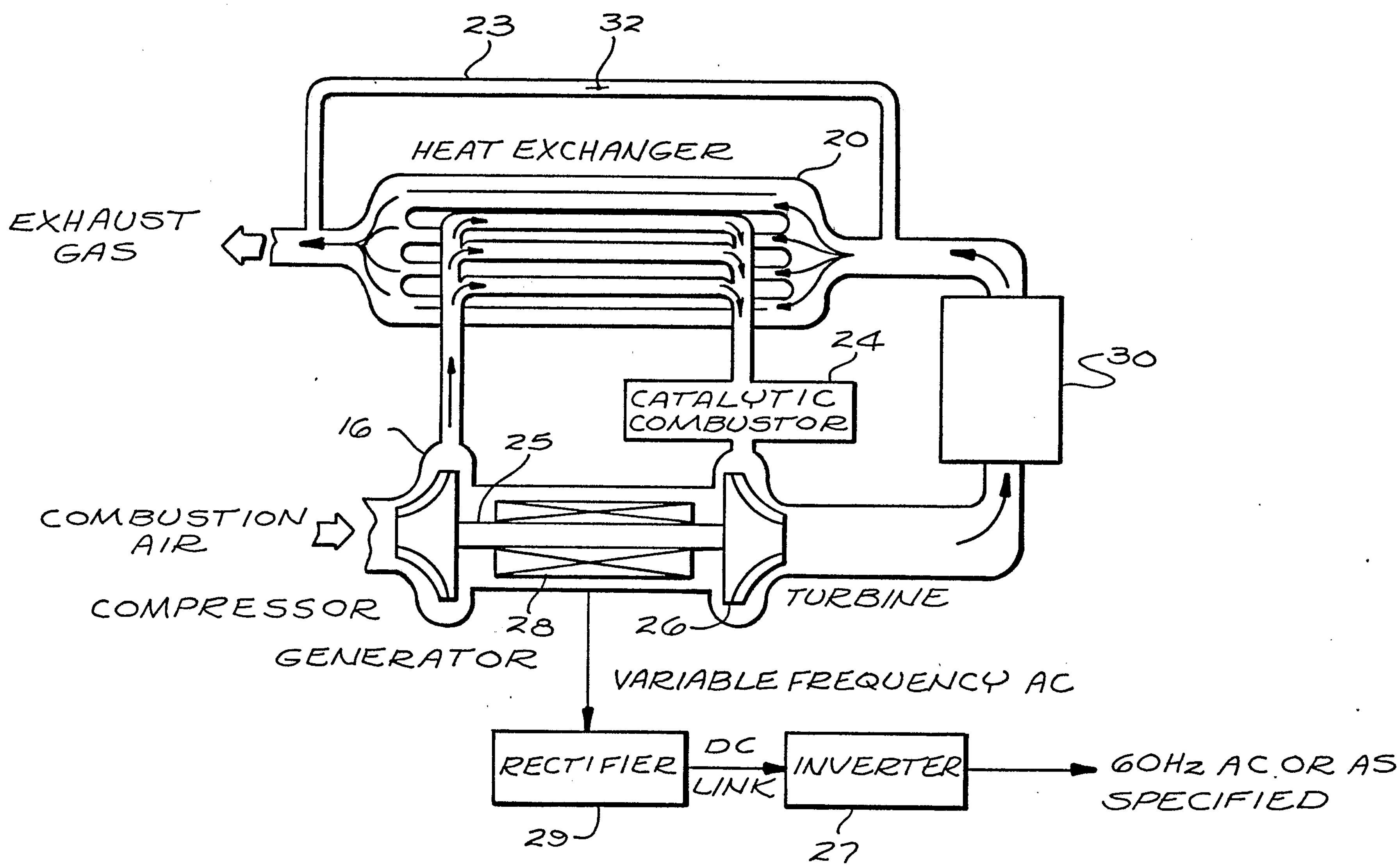


FIG. 1

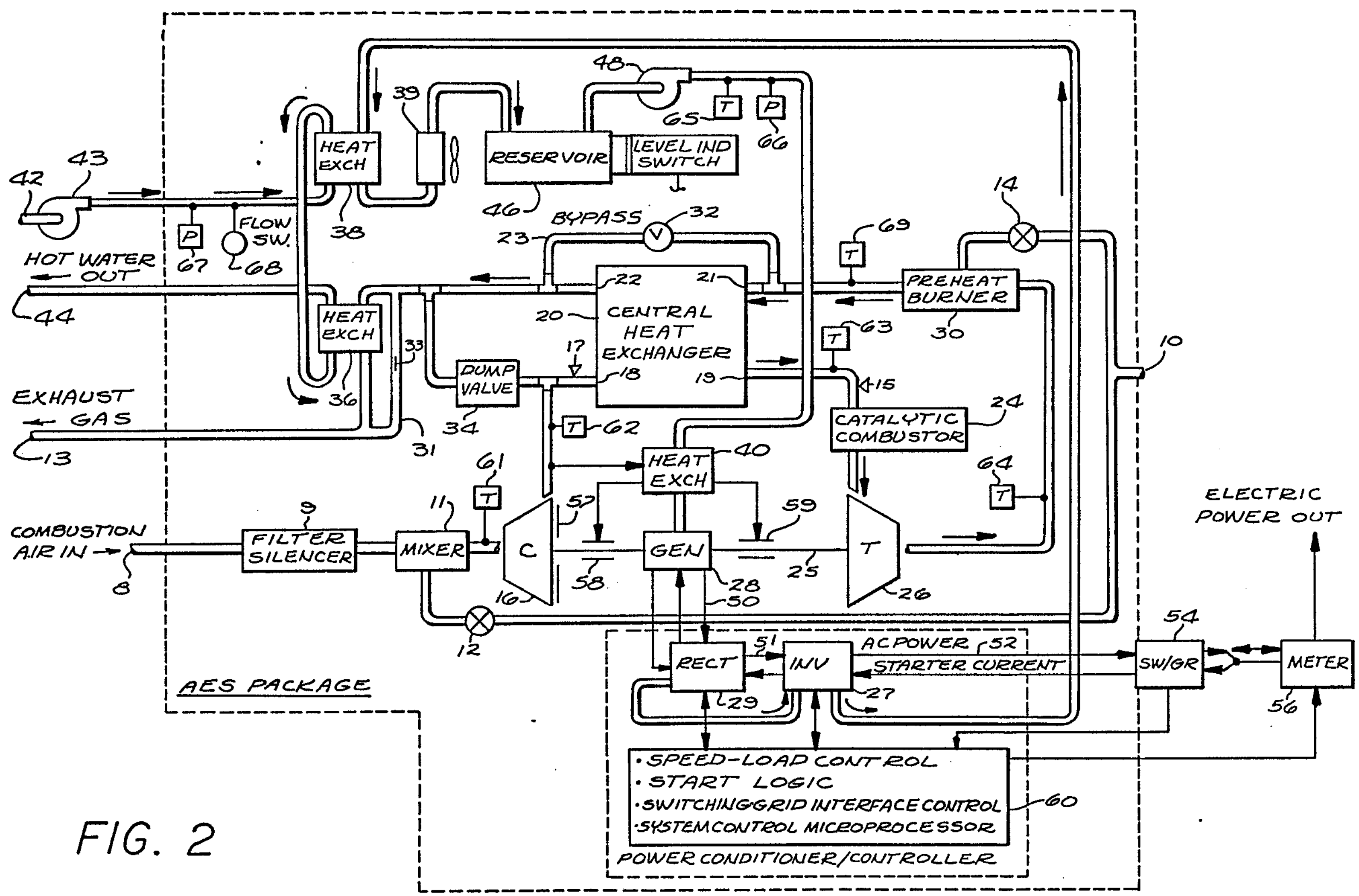
HEAT EXCH
RESERVOIR
LEVEL IND SWITCH
HOT WATER OUT
FLOW SW.
BYPASS
CENTRAL HEAT EXCHANGER
PREHEAT BURNER
PUMP VALVE
EXHAUST GAS
CATALYTIC COMBUSTOR
HEAT EXCH
COMBUSTION AIR IN
FILTER SILENCER
MIXER
C
GEN
T
ELECTRIC POWER OUT
RECT
INV
AC POWER
STARTER CURRENT
SW/GR
METER
AES PACKAGE
• SPEED-LOAD CONTROL
• START LOGIC
• SWITCHING GRID INTERFACE CONTROL
• SYSTEM CONTROL MICROPROCESSOR
POWER CONDITIONER/CONTROLLER

FIG. 2

0271360

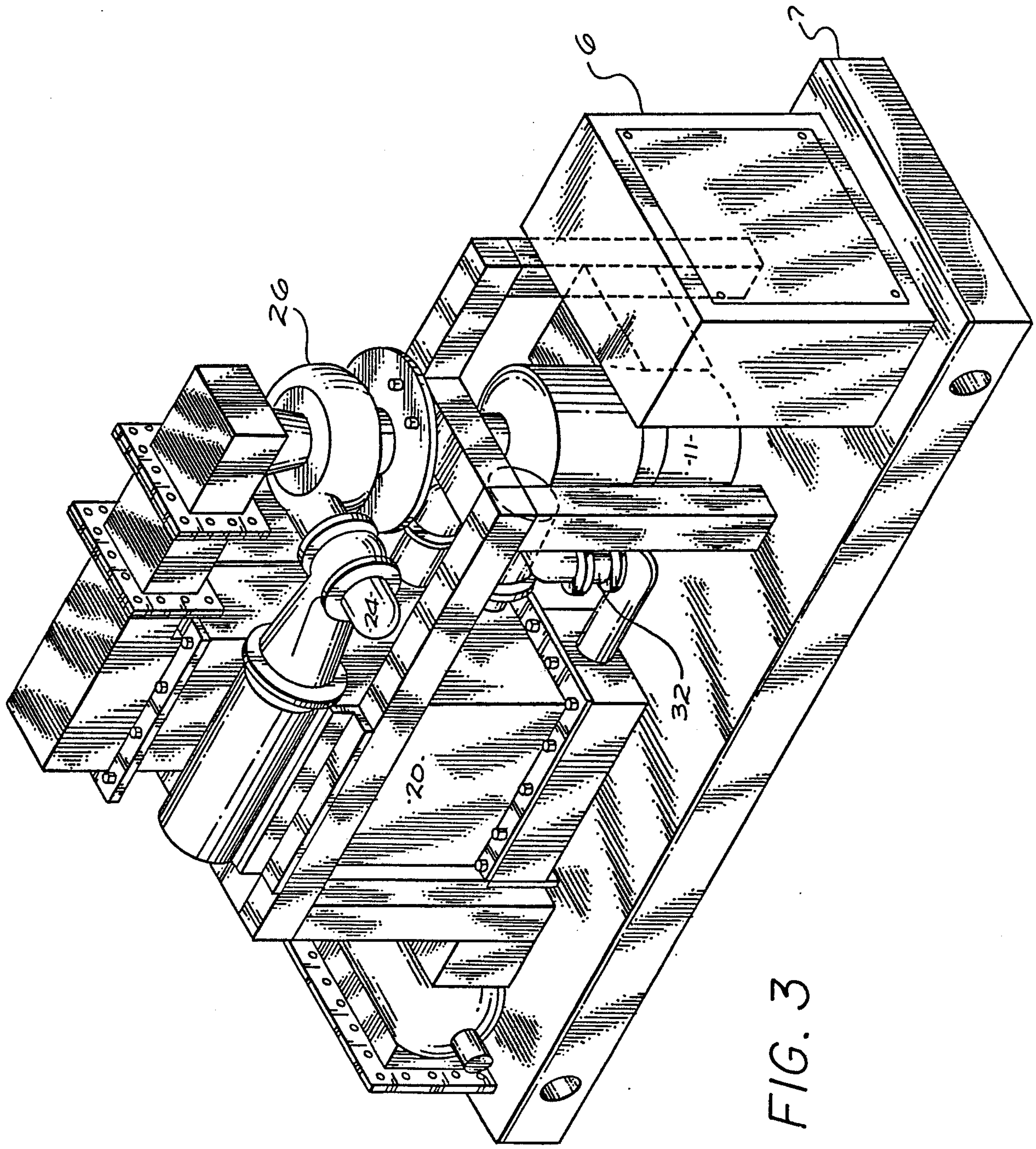


FIG. 3